# FASCICULE DE BREVET EUROPEEN

(11) **EP 0 719 671 B1**
(45) Date de publication et mention de la délivrance du brevet: **25.03.1998**
(21) Numéro de dépôt: 95402650.6
(22) Date de dépôt: 23.11.1995
(51) Int. Cl.: B60Q 1/04

(54) **Dispositif d'indexation d'un bloc optique sur un élément de carrosserie de véhicule**
Positionierungseinrichtung einer optischen Einheit auf die Fahrzeugskarosserie
Optical unit positioning device on a vehicle body

(30) Priorité: 28.12.1994 FR 9415798
(43) Date de publication de la demande: 03.07.1996
(73) Titulaire: AUTOMOBILES PEUGEOT, 75116 Paris (FR); AUTOMOBILES CITROEN, 92200 Neuilly-sur-Seine (FR)
(72) Inventeur: Arnould, Dominique, F-25600 Sochaux (FR)
(74) Mandataire: Polus, Camille

(56) Documents cités:
- DE-A- 3 021 804
- FR-A- 2 685 265

## Description

La présente invention concerne l'agencement d'un bloc optique, par exemple d'un projecteur de véhicule automobile, sur un élément de carrosserie adjacent. En particulier, l'invention concerne un dispositif d'indexation dudit bloc optique.

Actuellement, l'indexage d'un tel projecteur, qui doit permettre un affleurement précis de sa face avant, c'est-à-dire de sa glace, par rapport aux pièces de carrosserie adjacentes, se fait sur des pièces intermédiaires (boîtier et pièce de structure interne, par exemple). En raison des dispersions de fabrication, il est donc nécessaire de prévoir des systèmes d'ajustement pour obtenir un bon affleurement de la glace.

Par ailleurs, le document FR-A-2 685 265 propose l'indexage direct de la glace sur l'aile permettrait d'éviter ces problèmes. Toutefois, cette solution entraîne, en utilisation, une détérioration de la glace dûe aux frottements et aux chocs entre la glace et le métal de la carrosserie.

La présente invention a pour but de réaliser un indexage direct de la glace de bloc optique sur une pièce de carrosserie adjacente, ne présentant pas les inconvénients précités, tout en mettant en jeu des moyens simples, efficaces et peu coûteux.

A cet effet, l'invention a pour objet un dispositif d'indexation d'un bloc optique, sur un élément de carrosserie adjacent de véhicule automobile, comprenant un pion porté par la glace dudit bloc adapté pour pénétrer dans une lumière ménagée dans l'élément de carrosserie et un organe de protection interposé entre des surfaces en regard de la glace et de l'élément de carrosserie, qui portent respectivement le pion et la lumière.

Suivant d'autres caractéristiques de l'invention :
- l'organe de protection est réalisé en un matériau amortisseur élastique ;
- l'organe de protection est en caoutchouc thermoplastique ;
- l'élément de carrosserie délimite un logement de forme complémentaire de celle de la face avant de la glace, ce logement étant muni d'un rebord longitudinal destiné à être en regard d'une partie inférieure d'un rebord de la glace, et l'organe de protection comprend un manchon muni d'un trou borgne destiné à loger le pion venu de matière avec la partie inférieure de la glace, et deux branches reliées à l'extrémité ouverte du manchon adpatées pour s'étendre sur cette partie inférieure ;
- deux rondelles sont respectivement positionnées entre chacune des branches du manchon et l'élément de carrosserie ;
- les rondelles sont venues de matière avec l'organe de protection ; et
- la lumière ménagée dans le rebord de l'aile, est de forme oblongue et s'étend longitudinalement dans le rebord.

L'invention va maintenant être décrite plus en détail et à titre d'exemple non limitatif en liaison avec les dessins, dans lesquels :
- la figure 1 est une vue en perspective d'un agencement d'un bloc optique sur un élément de carrosserie adjacent ;
- la figure 2 est une vue en coupe transversale selon une ligne 2-2 de l'agencement de la figure 1 ;
- la figure 3 est une vue en coupe longitudinale selon une ligne 3-3 de l'agencement de la figure 1 ; et
- la figure 4 représente une coupe transversale selon une ligne 4-4 de l'agencement de la figure 1.

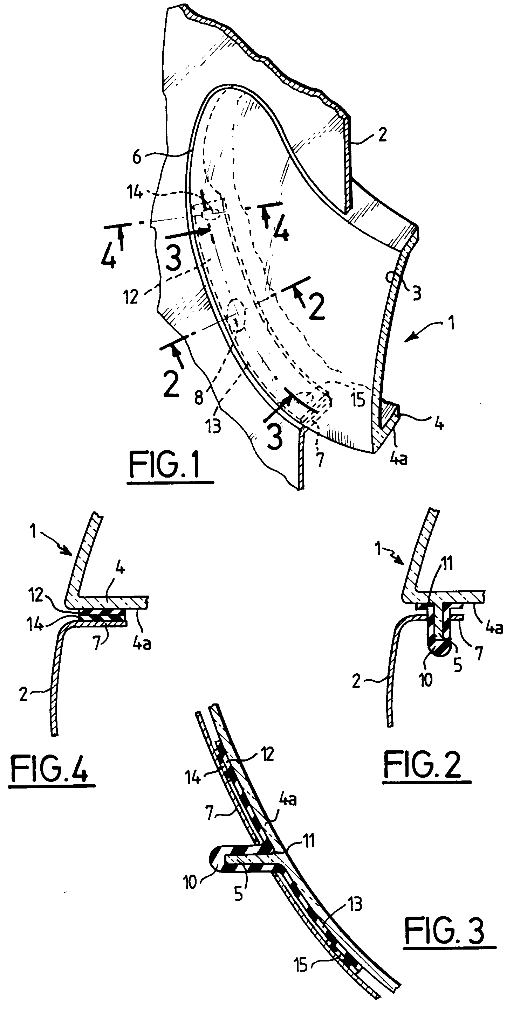

On a représenté à la figure 1 une glace 1 de bloc optique pour véhicule automobile et une aile de carrosserie 2 de ce véhicule.

La glace 1, réalisée par exemple en verre, possède de manière classique une face avant 3 et un rebord 4 dirigé vers l'arrière, coopérant avec un boîtier non représenté.

Un pion cylindrique 5 (figures 2 et 3) venu de matière avec la partie inférieure 4a du rebord 4 fait saillie vers l'extérieur par rapport à ce rebord.

L'aile 2 délimite un logement 6 de forme complémentaire de celle de la glace 1 et comporte un rebord 7 dirigé vers l'intérieur du véhicule. Ce rebord est prévu le long du bord inférieur du logement 6 et comporte une lumière 8 de forme oblongue.

Un organe amortisseur élastique, réalisé par exemple en caoutchouc thermoplastique, est disposé entre la partie inférieure 4a du rebord 4 de la glace 1 et le rebord 7 de l'aile de carrosserie 2. Il comporte un manchon 10 cylindrique, à trou borgne 11 (figures 2 et 3), qui est destiné à être placé sur le pion 5, et deux branches 12 et 13 identiques qui s'étendent radialement à partir de l'extrémité ouverte du manchon. Les deux branches 12 et 13 sont rectangulaires, ont une largeur égale à celle du rebord 7 et une longueur sensiblement égale à la moitié de celle de ce rebord. Les dimensions intérieures du manchon 10 sont identiques aux dimensions du pion 5.

Avant la mise en place de la glace 1 dans l'aile 2, le manchon 10 est enfilé sur le pion 5. Les branches 12 et 13 de l'organe élastique s'étendent alors longitudinalement sur la partie inférieure 4a du rebord 4.

Lors du positionnement de la glace 1 par rapport à l'aile 2, par insertion du pion 5 muni de son manchon 10 dans la lumière 8, deux rondelles 14 et 15 sont interposées entre les branches 12 et 13 et le rebord 7 de l'aile 2 (voir figures 3 et 4). Ces rondelles sont placées au niveau des extrémités libres des branches 12 et 13 et sont par exemple réalisées en caoutchouc.

La forme oblongue de la lumière 8 permet d'ajuster la position de la glace 1 par rapport à l'aile 2, pour obtenir un bon affleurement de la glace. Le bloc optique est alors immobilisé par des moyens conventionnels (non représentés).

Ainsi, l'organe élastique permet, grâce à ses caractéristiques mécaniques, de protéger la glace 1 vis-à-vis de l'aile 2 de carrosserie et de maintenir le pion 5 dans la lumière 8 grâce à son élasticité. Par ailleurs, les rondelles 14 et 15 servent d'une part de moyens d'amortissement entre la glace et l'aile pour amortir les vibrations liées à la marche du véhicule, et d'autre part de moyens formant entretoise pour obtenir un bon affleurement de la glace 1 par rapport à l'aile 2.

En variante, il peut être intéressant de réaliser la glace 1 en matière plastique et de donner au manchon 10, aux branches 12, 13 et aux rondelles 14, 15 une couleur leur permettant de ne pas être visibles de l'extérieur, à travers la glace. Par exemple, ils peuvent être de la couleur de la glace (translucide, rouge, orange, etc...) ou de la couleur de la caisse du véhicule. De façon préférentielle, les rondelles 14 et 15 sont venues de matière avec l'élément élastique.

Par ailleurs, la glace 1, dans cet agencement, peut ne pas être placée seulement dans une aile de carrosserie, mais également dans toute pièce destinée à recevoir un bloc optique, par exemple dans un pare-choc.

## Revendications

1. Dispositif d'indexation d'un bloc optique sur un élément de carrosserie (2) adjacent de véhicule automobile comprenant un pion (5) porté par la glace (1) du bloc optique et adapté pour pénétrer dans une lumière (8) ménagée dans l'élément (2) de carrosserie, caractérisé en ce qu'il comprend en outre un organe de protection (10, 12, 13, 14, 15) interposé entre des surfaces (4a, 7) en regard de la glace (1) et de l'élément (2) de carrosserie, qui portent respectivement le pion (5) et la lumière (8).

2. Dispositif selon la revendication 1, caractérisé en ce que l'organe de protection (10, 12, 13, 14, 15) est réalisé en un matériau amortisseur élastique.

3. Dispositif selon la revendication 2, caractérisé en ce que l'organe de protection (10, 12, 13, 14, 15) est en caoutchouc thermoplastique.

4. Dispositif selon l'une quelconque des revendications 1 à 3, caractérisé en ce que l'élément de carrosserie (2) délimite un logement (6) de forme complémentaire de celle de la face avant de la glace (1), ce logement (6) étant muni d'un rebord (7) longitudinal destiné à être en regard d'une partie inférieure (4a) d'un rebord (4) de la glace (1), et en ce que l'organe de protection comprend un manchon (10) muni d'un trou borgne destiné à loger le pion (5) venu de matière avec la partie inférieure (4a), et deux branches (12, 13) reliées à l'extrémité ouverte du manchon (10) adpatées pour s'étendre sur cette partie inférieure (4a).

5. Dispositif selon la revendication 4, caractérisé en ce que deux rondelles (14, 15) sont respectivement positionnées entre chacune des branches (12, 13) de l'organe de protection et l'élément (2) de carrosserie.

6. Dispositif selon la revendication 5, caractérisé en ce que les rondelles (14, 15) sont venues de matière avec l'organe de protection.

7. Dispositif selon l'une quelconque des revendications 4 à 6, caractérisé en ce que la lumière (8) ménagée dans le rebord (7) de l'aile (2) est de forme oblongue et s'étend longitudinalement dans le rebord (7).

## Claims

1. Device for indexing an optical unit to an adjacent element (2) of the motor vehicle bodywork, comprising a peg (5) borne by the glass (1) of the optical unit and designed to enter an aperture (8) made in the bodywork element (2), characterized in that it further comprises a protective member (10, 12, 13, 14, 15) inserted between surfaces (4a, 7) facing each other of the glass (1) and of the bodywork element (2), which surfaces respectively bear the peg (5) and the aperture (8).

2. Device according to Claim 1, characterized in that the protective member (10, 12, 13, 14, 15) is made of an elastic shock-absorbing material.

3. Device according to Claim 2, characterized in that the protective member (10, 12, 13, 14, 15) is made of a thermoplastic rubber.

4. Device according to any one of Claims 1 to 3, characterized in that the bodywork element (2) delimits a housing (6) of a shape that complements that of the front face of the glass (1), this housing (6) having a longitudinal rim (7) intended to face a lower part (4a) of a rim (4) of the glass (1); and in that the protective member comprises a sleeve (10) which has a blind hole intended to house the peg (5) formed integrally with the lower part (4a), and two branches (12, 13) which are attached to the open end of the sleeve (10) and designed to extend over this lower part (4a).

5. Device according to Claim 4, characterized in that two washers (14, 15) are positioned one between each of the branches (12, 13) of the protective member and the bodywork element (2).

6. Device according to Claim 5, characterized in that the washers (14, 15) are formed integrally with the protective member.

7. Device according to any one of Claims 4 to 6, characterized in that the aperture (8) made in the rim (7) of the wing (2) is of oval shape and extends longitudinally in the rim (7).

## Patentansprüche

1. Einrichtung für die Positionierung einer optischen Einheit auf einem angrenzenden Element (2) der Karosserie eines Kraftfahrzeuges,
**dadurch gekennzeichnet**, **daß**
sie einen Zapfen (5) aufweist, welcher von der Verglasung (1) der optischen Einheit getragen wird und so ausgelegt ist, daß er in ein Langloch (8) eingreifen kann, welches in dem Element (2) der Karosserie vorgesehen ist, und daß sie außerdem eine Schutzvorrichtung (10, 12, 13, 14, 15) aufweist, welche zwischen den gegenüberliegenden Flächen (4a, 7) der Verglasung (1) und des Elementes (2) der Karosserie angeordnet ist, welche jeweils den Zapfen (5) und das Langloch (8) tragen.

2. Einrichtung nach Anspruch 1,
**dadurch gekennzeichnet**, **daß**
die Schutzvorrichtung (10, 12, 13, 14, 15) aus einem elastischen Dämpfungsmaterial hergestellt ist.

3. Einrichtung nach Anspruch 2,
**dadurch gekennzeichnet**, **daß**
die Schutzvorrichtung (10, 12, 13, 14, 15) aus einem thermoplastischen Kautschuk hergestellt ist.

4. Einrichtung nach einem der Ansprüche 1 bis 3,
**dadurch gekennzeichnet**, **daß**
das Element (2) der Karosserie einen Ausschnitt (6) enthält, der eine Form hat, welche der Form der Vorderseite der Verglasung (1) entspricht, und daß dieser Ausschnitt (6) mit einer länglichen Randleiste (7) ausgestattet ist, welche gegenüber dem unteren Teil (4a) einer Randleiste (4) der Verglasung (1) angeordnet ist, und dadurch, daß die Schutzvorrichtung einen mit einem Blindloch versehenen Stutzen (10) aufweist, in den der einstückig mit dem unteren Teil (4a) ausgebildete Zapfen (5) eingesetzt werden kann, und daß zwei mit dem offenen Ende des Stutzens (10) verbundene Schenkel (12, 13) vorgesehen sind, welche sich über diesen unteren Teil (4a) erstrecken.

5. Einrichtung nach Anspruch 4,
**dadurch gekennzeichnet**, **daß**
zwei Paßscheiben (14, 15) jeweils zwischen diesen beiden Schenkeln (12, 13) der Schutzvorrichtung und dem Element (2) der Karosserie angeordnet sind.

6. Einrichtung nach Anspruch 5,
**dadurch gekennzeichnet**, **daß**
die Paßscheiben (14, 15) einstückig mit der Schutzvorrichtung ausgebildet sind.

7. Einrichtung nach einem der Ansprüche 4 bis 6,
**dadurch gekennzeichnet**, **daß**
das in die Randleiste (7) des Kotflügels (2) eingebrachte Langloch (8) eine längliche Form hat und sich in der Randleiste (7) in Längsrichtung erstreckt.
